# EUROPEAN PATENT SPECIFICATION

(11) **EP 2 921 403 B1**
(45) Date of publication and mention of the grant of the patent: **01.03.2017**
(21) Application number: 14160746.5
(22) Date of filing: 19.03.2014
(51) Int. Cl.: B64C 25/60, F16F 9/32, G01F 23/284

(54) **A shock absorber and a method of determining the level of liquid in a shock absorber**
Stoßdämpfer und Verfahren zur Bestimmung des Flüssigkeitsstandes in einem Stoßdämpfer
Amortisseur et procédé permettant de déterminer le niveau de liquide dans un amortisseur

(43) Date of publication of application: 23.09.2015
(73) Proprietor: Safran Landing Systems UK Ltd, Gloucester, Gloucestershire GL2 9QH (GB)
(72) Inventor: Southern, Anthony Paul, Malvern, Worcestershire WR14 3JX (GB); Sartor, Pia, Bristol BS6 6JG (GB)
(74) Representative: Wardle, Callum Tarn

(56) References cited:
- WO-A1-96/19715
- US-A1- 2005 241 391
- US-A1- 2010 017 052

## Description

### BACKGROUND TO THE INVENTION

The performance of an oleo-pneumatic shock absorber used in aircraft landing gear depends substantially on the level of hydraulic fluid situated therein. Current in-service methods for establishing the condition of an oleo-pneumatic shock absorber are based on measurement of temperature, gas pressure and shock absorber travel which are then used to estimate the level of hydraulic fluid in the shock absorber. Whilst measuring these parameters is straightforward, incorrect conclusions can be drawn and inappropriate actions can be taken if, for example, the level of hydraulic fluid within the shock absorber is estimated to be correct when in fact it is too low. An incorrectly serviced shock absorber containing, for example, too little or too much hydraulic fluid will cause the landing gear to perform outside its design boundaries and in extreme cases could cause the shock absorber and thus the landing gear to fail.

Various techniques have been proposed for measuring the fluid levels including optical probe systems and ultrasonic techniques. One such system is described in U.S. Pat. No. 2010,0,017,052.

However, optical probe systems only provide pass/fail statistic and are not capable of continuous measurement over a range of fluid levels. Ultrasonic techniques transmit ultrasonic pulses towards the gas-oil boundary and measure time of flight of received waves reflected off the boundary. However, foam and fluid contamination at the gas-liquid boundary tends to cause significant scattering and attenuation of the transmitted ultrasonic signal and piezo transducers used to generate the ultrasonic signals are fragile and thus susceptible to failure from the shock of impact of an aircraft landing gear with the ground.

### SUMMARY OF THE INVENTION

According to a first aspect of the invention there is provided a telescopic shock absorber, comprising: a housing; a cavity located within the housing and containing a liquid and a gas; and a sensor for measuring the level of the liquid in the cavity, the sensor comprising: a first waveguide having a first end and a second end; and a communications interface operable to transfer electrical signals between the first waveguide and the exterior of the housing, wherein the first waveguide is arranged such that when the shock absorber is in normal use the first end is surrounded by the gas and the second end is immersed in the liquid.

By locating the first waveguide within the cavity across the gas-liquid boundary, an accurate measurement of the level of hydraulic fluid within the shock absorber can be ascertained. The first waveguide is able to provide an accurate and substantially continuous measurement of the level of fluid within the cavity which is substantially unaffected by foam and fluid contamination at the gas-liquid boundary.

The shock absorber comprises a transceiver coupled to one of the ends of the first waveguide. The transceiver may then couple electromagnetic (EM) waves into the first waveguide and receive reflected EM waves from the first waveguide. In this sense, the end of the first waveguide which is not coupled to the transceiver may be shorted so as to act as a node from which EM waves transmitted into the waveguide are reflected. By coupling EM waves into the waveguide and receiving EM waves reflected from the same end, a change in frequency of peaks in amplitude of reflected waves can be used to determine the average dielectric constant of material within the waveguide and thus the ratio of liquid relative to gas.

Gas and impurities dissolved in the liquid may affect the liquid's dielectric constant, so to improve the accuracy of the above calculation, the shock absorber may further comprise a calibration waveguide fully immersed in the liquid when the shock absorber is in normal use, the transceiver being coupled to an end of the first calibration waveguide. This calibration waveguide may be used to more accurately measure the dielectric constant of the liquid such that the measure of the level of the liquid in the first waveguide can be improved.

The shock absorber may further comprise a second waveguide disposed within the cavity having a first end and a second end, the second waveguide arranged such that when the shock absorber is in normal use, the first end of the second waveguide is immersed in the liquid and the second end of the second waveguide is immersed in the gas.

The communication interface may be operable to transfer electrical signals between the second waveguide and the exterior of the housing. By measuring the fluid level in the shock absorber using both the first and second waveguides, the accuracy of the fluid level measurement can be improved. In such embodiments, the transceiver is preferably coupled to the first end of the first waveguide and the first end of the second waveguide. The accuracy of measurement of fluid level is maximised when the fluid level is closest to the end into which EM waves are coupled. Thus, by coupling EM waves into opposite ends of the two waveguides, a measurement of fluid level can always be acquired when one of the waveguides is operating in its most accurate configuration.

The first and/or second waveguides may be a coaxial waveguide comprising a hollow tube arranged coaxially around a solid core. Each hollow tube is preferably perforated such that fluid is able to flow through the waveguide(s) so that performance of the shock absorber is not affected by their presence.

The communications interface may comprise a port in a wall of the housing, arranged to pass one or more transmission mediums through the housing wall but prevent leakage of fluid or gas in or out of the housing.

The communications interface may comprise an inductive loop located proximate to a wall of the cavity thereby eradicating issues associated with fluid and gas leakage through a port which may otherwise be required in the wall.

According to a second aspect of the invention there is provided a method of measuring the level of liquid in a telescopic shock absorber, the shock absorber comprising a housing and a cavity located within the housing and containing a liquid and a gas, the method comprising: transmitting an electromagnetic signal over a range of frequencies into a first end or a second end of a first waveguide located within the cavity, the first end surrounded by the gas, the second end immersed in the liquid; receiving a reflected EM signal from the first waveguide; analysing the reflected EM signal to detect one or more peaks in the reflected EM signal; and determining the level of the liquid in the cavity as a function of the frequency of the peaks and the dielectric constants of the liquid and the gas.

The method may further comprise transmitting an electromagnetic signal over a range of frequencies into the calibration waveguide located within the cavity and submerged in the liquid, receiving a reflected EM signal from the calibration waveguide, analysing the reflected EM signal to detect one or more calibration peaks in the reflected EM signal and determining the dielectric constant of the liquid as a function of the frequency of the calibration peaks and at least one dimension of the calibration waveguide.

The method may further comprise transmitting an electromagnetic signal over a range of frequencies into a further calibration waveguide located within the cavity and surrounded by the gas, receiving a reflected EM signal from the further calibration waveguide, analysing the reflected EM signal to detect one or more further calibration peaks in the reflected EM signal and determining the dielectric constant of the liquid as a function of the frequency of the further calibration peaks and at least one dimension of the waveguide.

The method may further comprise transmitting an electromagnetic signal over a range of frequencies into a first end of a second waveguide located within the cavity the first end immersed in the liquid, the second waveguide having a second end surrounded by the gas; receiving a reflected EM signal from the first waveguide; analysing the reflected EM signal to detect one or more peaks in the reflected EM signal; and determining the level of the liquid in the cavity as a function of the frequency of the peaks and the dielectric constants of the liquid and the gas.

### BRIEF DESCRIPTION OF THE DRAWINGS

Embodiments of the present invention will now be described, by non-limiting example only, with reference to the accompanying drawings, in which:
Figure 1 is a schematic diagram of a landing gear leg comprising a shock absorber;
Figure 2 is a schematic diagram of a shock absorber according to an embodiment of the present invention;
Figure 3 is a schematic diagram of a shock absorber according to an embodiment of the present invention in which a transceiver is provided within a cavity in the shock absorber;
Figure 4 is a variation of the shock absorber shown in Figure 2 comprising an additional calibration waveguide;
Figure 5 is a variation of the shock absorber shown in Figure 2 comprising two fluid level measuring waveguides;
Figure 6 is a schematic diagram of a shock absorber according to an embodiment of the present invention and an interrogation device; and
Figure 7 is a schematic diagram of a shock absorber according an embodiment of the present invention comprising an inductive device for transferring signals across a wall of the shock absorber.

### DESCRIPTION OF EMBODIMENTS OF THE INVENTION

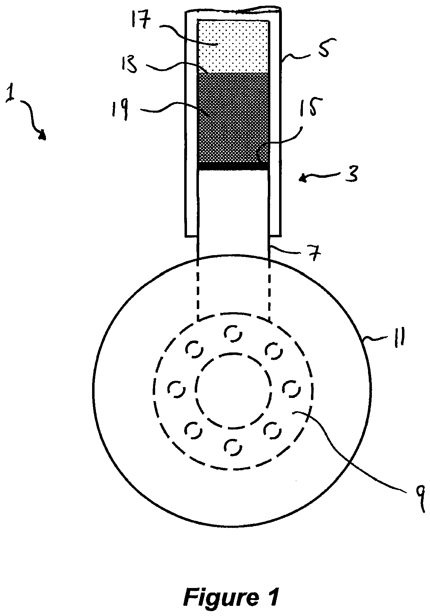

Figure 1 shows a cross section of a known aircraft landing gear 1. The aircraft landing gear 1 comprises a telescopic support leg 3 in the form of an oleo-pneumatic shock absorber (or oleo strut) comprising a housing 5 having a bore into which a rod or piston 7 is slidably disposed. Attached to the lower end of the rod 7 is a wheel axle 9 onto which a wheel 11 may be attached. The upper end of the housing 5 (not shown) may be attached in any known manner to the airframe of an aircraft (also not shown). In other embodiments, the orientation of the shock absorber may be flipped such that a wheel is attached to the upper end of the housing 5, the lower end of the rod 7 being coupled to the airframe of an aircraft. A cavity 13, defined by the bore of the housing 5 and the upper end 15 of the rod 7, is filled with gas and a liquid - usually a hydraulic fluid such as oil. The gas and hydraulic fluid are substantially separated in normal use as designated by gas 17 and liquid 19 regions shown in Figure 1.

The damping properties of the shock absorber 3 are affected by the level of hydraulic fluid present in the cavity 13 and so it is desirable to have an awareness of this level when the landing gear 1 is in service. However, as of the priority date of this application, it remains difficult to perform direct in-service measurements of the level of hydraulic fluid in the cavity 13. Accordingly, an estimate may be made based on measurements of temperature, gas pressure and shock absorber travel. An aim of the present invention is to provide an improved method of measuring the level of oil in a oleo-pneumatic shock absorber 3.

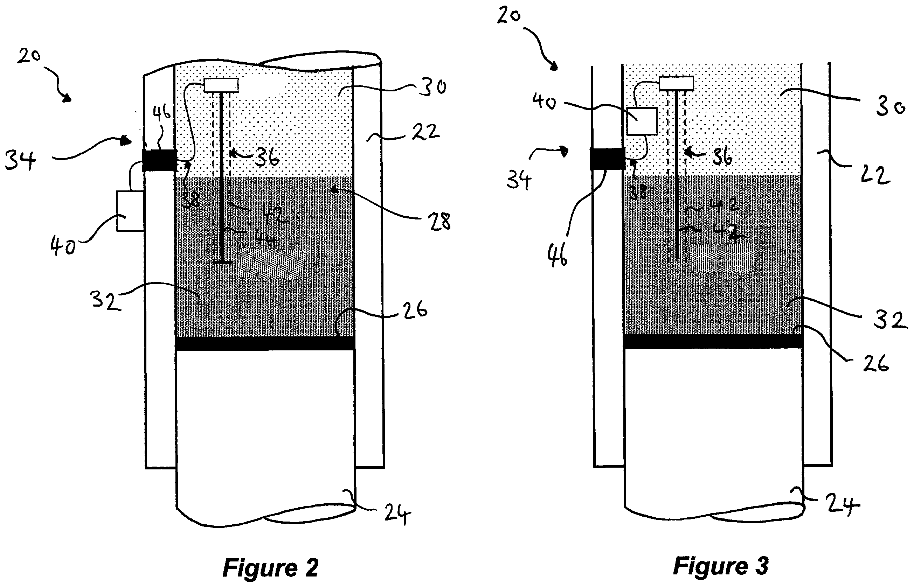

Figure 2 is a schematic diagram of a shock absorber 20 in accordance with an embodiment of the present invention. Like the shock absorber 3 shown in Figure 1, the shock absorber 20 of

Figure 2 comprises a housing 22 defining a bore into which a rod or piston 24 is slidably disposed. The bore in the housing 22 and the upper end 26 of the rod 24 define a cavity 28 which is filled with a gas (shown in gas region 30) and a liquid such as hydraulic fluid or oil (shown in the liquid region 32).

The shock absorber 20 further comprises a sensor, generally designated 34, operable to measure the level of fluid in the cavity 28. The sensor 34 comprises a waveguide 36, a communications interface 38, and an optional radio frequency (RF) transceiver 40. One end of the waveguide 36 is located in the liquid region 32 and the other, top end is situated in the gas region 30 of the cavity 28. In the embodiment shown, the waveguide 36 is a coaxial waveguide having an outer tube 42 coaxially surrounding a central conducting core 44. However in other embodiments any suitable waveguide may be used. For example, a PCB type waveguide such as a stripline, microstrip or other suitable waveguide may be used. To aid entry of liquid and gas into the waveguide 36 and in particular the gap between the tube 42 and the core 44, the tube 42 may be provided with a plurality of perforations. Such perforation permit free movement of fluid through the shock absorber 20 so that the presence of the waveguide 36 in the cavity 28 does not substantially affect the performance of the shock absorber 20.

The communications interface 38 is operable to transfer electrical signals between components within the cavity, such as the waveguide 36, and components external to the cavity, such as the RF transceiver 40 shown in Figure 2 fixed to the side of housing 22. In order to transfer signals through the wall of the housing 22 the communication interface 38 may include a sealed port 46 provided through the housing wall. The port 46 may include connection means such as one or more sockets for connecting components of the sensor between the cavity and the outside of the housing 22. Such components may, for example, connect to the socket(s) via one or more complimentary plugs (not shown). Additionally or alternatively, components located within the cavity 28 may be hard wired to components located outside of the cavity via cables running through the port 46. In either case, it will be appreciated that one aspect of the port 46 is that it is sealed and thus does not allow fluid or gas to exit and/or enter the cavity 28. In addition to or as an alternative to the port 46, other techniques may be used to transfer signals across to the exterior of the cavity, such as acoustic, optical and/or wireless transmission, or inductive coupling as will be described in more detail below.

Preferably, the RF transceiver 40 is connected to the waveguide 36 via the communications line 38, as shown in Figure 2. By minimizing or eliminating the use of active electronic components inside the probe, the likelihood of device failure is reduced. Additionally, access to active components is improved such that sensor maintenance and repair can be affected without dismantling the shock absorber 20. Alternatively however, the transceiver 40 may be positioned within the cavity 28 and connected between the communications interface 38 and the waveguide 36, as shown in Figure 3 where like parts have been given like numbering. In either case, the transceiver 40 is electrically connected to one end of the waveguide 36 and is operable to couple RF signals into the waveguide 36 and to receive signals reflected out of the waveguide 36. The transceiver may be coupled to an end of the waveguide immersed in the liquid region 32 or positioned in the gas region 30. In a further embodiment, the transceiver 40 may be integrated with the waveguide. The RF transceiver 40 may comprise a network analyser and/or a processor for processing reflected signals received from the waveguide 36. Alternatively, the processor may form part of a separate device not forming part of the sensor 34. Such a device may connect to the transceiver via the communications interface 38.

Operation of the sensor 34 will now be described. The waveguide 36 is preferably shorted at the end opposite to that coupled to the RF transceiver 40. Accordingly, the waveguide acts as a short-circuited transmission line. Waves are coupled into the waveguide 36 by the transceiver 40, travel along the waveguide 36 and are reflected at the shorted end. Reflected waves then travel back up the waveguide 36 and are received at the transceiver 40. Transmitting a wave having a wavelength equal to a multiple of a quarter of the length of the waveguide will create a standing wave in the waveguide 36, causing the waveguide 36 to resonate. In accordance with transmission line theory, the resonant frequency of the waveguide 36 depends on the dielectric constant of the material disposed within the waveguide 36 as this affects the speed of travel of waves in the waveguide 36. Since the dielectric constant of the liquid in the liquid region 32 differs from that of the gas region, as the level of liquid in the cavity 28 changes, the dielectric properties of the material (gas and liquid) located within the waveguide also changes. Accordingly, as the liquid level moves up and down the waveguide, the resonant frequency of the waveguide will vary.

During operation, the RF transceiver 40 may couple an RF signal into the waveguide 36. The frequency of the transmitted RF signal may be swept over a range of frequencies and subsequent reflected RF signals received and preferably recorded by the RF transceiver 40. Peaks in amplitude of the received RF signals which correspond to resonance in the waveguide may then be recorded, together with the corresponding excitation frequency of the transmitted RF signal. With knowledge of the dielectric constant of both the gas and the liquid, the fluid height in the cavity may then be calculated from the frequency corresponding to maxima in the reflected RF signal.

The present invention therefore allows for accurate continuous measurement of fluid level in an oleo pneumatic shock absorber. Accordingly, the system may be used as a prognostic maintenance system whereby the rate of loss of fluid can be assessed and decision made on when to undertake corrective action. By measuring the actual fluid level within the shock absorber, ground crew no longer have to rely on unreliable and inaccurate methods of estimating the level of fluid within the cavity.

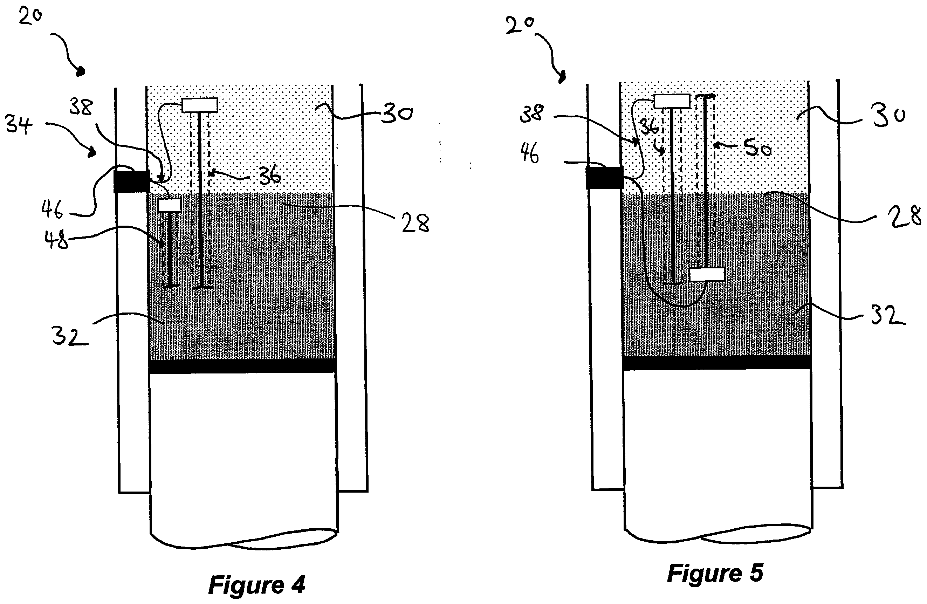

Whilst reasonable estimates of the dielectric constant of the gas and liquid disposed in the cavity 28 can be made, in certain conditions the dielectric constant of the liquid (in particular oil) can vary considerable. For example, the dielectric constant of many hydraulic fluids is dependent both on temperature of the liquid and the amount of gas dissolved therein. The inventors have realised that the accuracy of measurement could be further improved by measuring of the dielectric properties of the fluid within the liquid region 32. Figure 4 shows a variation of the shock absorbers shown in Figures 2 and 3, the sensor 34 further comprising a calibration waveguide 48 coupled to the RF transceiver and located within the liquid region 32 of the cavity 28. Using an equivalent technique to that described above for the first waveguide 36, the RF transceiver 40 may transmit a swept RF signal into the calibration waveguide 48 and receive and preferably record the reflected RF signal. The transmission frequency at which resonance of the waveguide 48 occurs may be recorded. With knowledge of the dimensions of the waveguide 48 and the measured frequencies of resonance of the waveguide 48, an accurate determination of the dielectric constant of the liquid therein can be ascertained. Using this measurement, the level of fluid in the main waveguide 36 can be more accurately calculated, such calculations being independent on temperature and the quantity of gas dissolved in the liquid.

Additionally or alternatively, the sensor 34 may comprise a further calibration waveguide (not shown) located in the gas region 30 so as to provide a realtime measurement of the dielectric properties of the gas. Such a further calibration waveguide may operate in a similar manner to the calibration waveguide 48 shown in Figure 4.

It will be appreciated that the response of the waveguide 36 is non-linear with the sensitivity of measurement of frequency peaks increasing when the gas-liquid boundary is furthest from the shorted end of the waveguide 36. That is, the sensor 34 is more sensitive to changes in fluid level at the end of the waveguide 36 furthest away from shorted end. Accordingly, in a further embodiment shown in Figure 5, a secondary waveguide 50 is provided which is upturned relative to the main waveguide 36. The end of the secondary waveguide 50 immersed in the liquid region 32 is coupled to the communications interface 38 and thus to the RF transceiver 40. The opposite end of the secondary waveguide 50 is situated in the gas region 30 and is shorted. Accordingly, when the level of oil drops toward the shorted end of the main waveguide 36 and the end of the secondary waveguide 50 connected to the transceiver 40, the secondary waveguide 50 is preferably used to determine the level of the liquid in the cavity 28 since the sensitivity of measurement by the secondary waveguide 50 will be higher. Conversely, when the level of liquid rises toward the shorted end of the secondary waveguide 50, the main waveguide 36 may be used to measure the level of liquid in the cavity. Additionally or alternatively, both waveguides 36 and 50 may be used to measure the level of liquid, such measurements being combined, averaged or analysed in a manner suitable to ascertain a more accurate measurement of the level of fluid in the cavity 28.

It will be appreciated that embodiments of Figures 4 and 5 could be combined to provide a sensor having two main measurement waveguides 36, 50 together with one or more calibration waveguides situated in the liquid region 32 and/or the gas region 30.

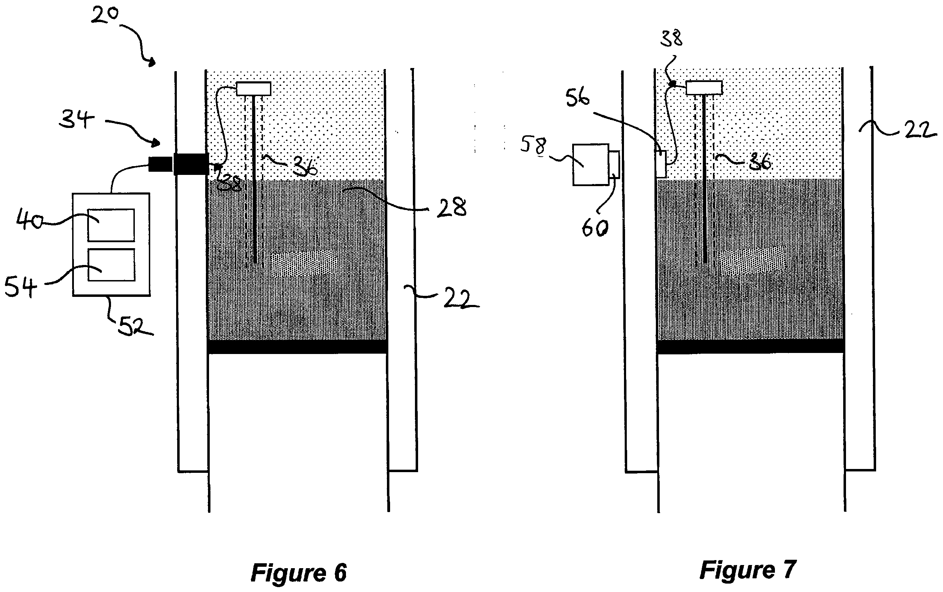

It will also be appreciated that in some embodiments, the RF transceiver 40 may not form part of the sensor 34. Instead, as shown in Figure 6, the RF transceiver may form part of a sensor interrogation device 52 which may be coupled to the waveguide via the communications interface 38. In this embodiment, a single waveguide 36 is shown for simplicity. The interrogation device 52 may be a handheld device operable, for example, by ground crew when the aircraft is on the ground, or may be a device situated elsewhere on the aircraft such as in the cockpit so as to feedback data on landing gear health to the air crew. The interrogation device 52 may include a user interface 54 to provide information such as a reading of the level of fluid within the cavity 28 and/or an input to initiate a reading of the fluid level by the sensor 36. In embodiments where the RF transceiver 40 forms part of the shock absorber 20 as shown in Figures 2 and 3, the interrogation device 50 may connect to the RF transceiver 40 directly (in the embodiment of Figure 2) or via the communications interface 38 (in the embodiment of Figure 3). In such embodiments, the interrogation device 52 does not include an RF transceiver 40, but may provide power to the transceiver for generating, transmitting and/or receiving RF signals from the waveguide and for powering the processor. In some embodiments, the processor may form part of the interrogation device 52, the RF transceiver 40 operable only to generate, transmit and receive RF signals and pass such signals to the interrogation device 52.

Figure 7 shows a further embodiment of the present invention, wherein the communications interface 38 comprises an inductive loop 56 for coupling signals across the wall of the housing 22. An interrogation device 50, which may be equivalent to the interrogation device 52 described above with reference to Figure 6, further comprises a complimentary induction coil 58 operable to interrogate the waveguide and receive signals. By using inductive coupling to transfer signals across the housing wall, reliability of the shock absorber may be maintained since the chance of leakage of gas or liquid through the communications interface 38 (e.g. through the port 46) is eradicated. In other embodiments, in addition or as an alternative to the inductive link across the housing wall, signals may be transmitted using other techniques known in the art such as acoustic, optical or wireless transmission. In a further embodiment (not shown), a hybrid communications interface may be implemented in which wires or cables are brought out through the wall of the housing 22 via a port such as the port 46 shown in Figure 2 and 3 and then connected to an inductive (or other wireless) device located in a readily accessible location on the landing gear. Ground crew may then interrogate the wireless device to ascertain the level of fluid in the cavity 28.

It will be appreciated that the schematic diagrams of the landing gear 1 shown in Figures 1 to 7 have been deliberately simplified so as not to distract from the implementation of the present invention. It will thus be appreciated that the present invention may be applicable to any type of landing gear known in the art having a shock absorber containing gas and liquid and a boundary therebetween. For example, landing gear legs may comprise any known type of sliding tube assembly. The sliding tube assembly (housing and piston) may be situated within a main fitting sub assembly (not show). Equally, the landing gear 1 may comprise a twin wheel axle or a mutli-wheel bogie assembly.

Additionally, whilst shock absorbers described above comprises a single stage, in other embodiments shock absorbers may comprise multiple stages. In such cases there may be multiple cavities and/or multiple gas-liquid boundaries. In such embodiments, one or more sensors may be disposed within one or more of the cavities so as to measure the level of one or more gas-liquid boundaries in the shock absorber.

It will be appreciated that the term radio frequency referred to throughout the present application relates to electromagnetic waves typically having a frequency in the range of between around 200 kHz to 300 GHz. The skilled person will also appreciate that whilst embodiments of the invention are described with reference to the use of RF waves, EM waves having frequencies outside of the RF spectrum may also be used, where suitable, without departing from the scope of this disclosure.

The skilled person will appreciate that features of the shock absorbers described with reference to Figure 2 to 7 may be combined where appropriate. For example, any communications interface described may be used on any of the embodiments described and any suitable arrangement of the RF transceiver 40, interrogation device 50 and communication interface may be implemented in respect of any of the described inventions. Features of different embodiments of the present invention may be combined wherever possible without departing from the scope of the invention.

## Claims

1. A system for determining the level of liquid in a shock absorber, the system comprising:
a telescopic shock absorber (20), comprising:
a housing (22);
a cavity (28) located within the housing and containing a liquid and a gas;
a sensor for measuring the level of the liquid in the cavity, the sensor comprising:
a first waveguide (36) having a first end and a second end,
wherein the first waveguide (36) is arranged such that when the shock absorber (20) is in normal use the first end is surrounded by the gas and the second end is immersed in the liquid; and
a communications interface (38) operable to transfer electrical signals between the first waveguide to the exterior of the housing; and
a transceiver (40) arranged to be connected to the first end or the second end of the first waveguide (36) and operable to couple electromagnetic (EM) waves into the first waveguide (36) and receive reflected EM waves from the first waveguide (36); transmit an electromagnetic signal over a range of frequencies into a first end or a second end of the first waveguide (36); receive a reflected EM signal from the first waveguide (36); analyse the reflected EM signal to detect one or more amplitude peaks in the reflected EM signal; **characterised in that** the transceiver is arranged to determine the level of the liquid in the cavity (28) as a function of the frequency of the amplitude peaks and the dielectric constants of the liquid and the gas.

2. A system according to claim 1, wherein the first end or the second end of the first waveguide which is not coupled to the transceiver (40) is shorted.

3. A system according to any of claims 1 to 2, further comprising a second waveguide (50) disposed within the cavity (28) and having a first end and a second end, the second waveguide (50) arranged such that when the shock absorber is in normal use, the first end of the second waveguide (50) is immersed in the liquid and the second end of the second waveguide (50) is immersed in the gas, and wherein the communications interface (38) is operable to transfer electrical signals between the second waveguide (50) and the exterior of the housing.

4. A system according to claim 3, wherein the transceiver is coupled to the first end of the first waveguide (36) and the first end of the second waveguide (50) and/or wherein the second end of the first waveguide (36) and the second end of the second waveguide (50) are shorted.

5. A system according to any preceding claim, further comprising a calibration waveguide (48) arranged to be fully immersed in the liquid when the shock absorber (20) is in normal use, the transceiver (40) being coupled to an end of the first calibration waveguide (48).

6. A system according to any preceding claim, wherein the first waveguide (36) is a coaxial waveguide comprising a hollow tube arranged coaxially around a solid core.

7. A system according to claim 6, wherein the hollow tube is perforated.

8. A system according to any of claims 1 to 5, wherein the first waveguide (36) is a printed circuit board (PCB) based waveguide.

9. A system according to any preceding claim, wherein the communications interface (38) comprises a port (46) in a wall of the housing and/or an inductive loop located proximate to a wall of the cavity.

10. An interrogation device for connection to the communications interface (38) or the transceiver of a telescopic shock absorber according to any preceding claim, the interrogation device operable to output data pertaining to the level of liquid in the cavity (28).

11. A method of determining the level of liquid in a telescopic shock absorber (20), the shock absorber comprising a housing (22) and a cavity (28) located within the housing and containing a liquid and a gas, the method comprising:
transmitting an electromagnetic signal over a range of frequencies into a first end or a second end of a first waveguide (36) located within the cavity, the first end surrounded by the gas, the second end immersed in the liquid;
receiving a reflected EM signal from the first waveguide (36); and
analysing the reflected EM signal to detect one or more amplitude peaks in the reflected EM signal; **characterised in that** the method further comprises:
determining the level of the liquid in the cavity (28) as a function of the frequency of the amplitude peaks and the dielectric constants of the liquid and the gas.

12. A method according to claim 11, further comprising: transmitting an electromagnetic signal over a range of frequencies into a calibration waveguide (48) located within the cavity and submerged in the liquid; receiving a reflected EM signal from the calibration waveguide; analysing the reflected EM signal to detect one or more calibration peaks in the reflected EM signal; and determining the dielectric constant of the liquid as a function of the frequency of the calibration peaks and at least one dimension of the calibration waveguide (48).

13. A method according to claim 12, further comprising transmitting an electromagnetic signal over a range of frequencies into a further calibration waveguide located within the cavity and surrounded by the gas, receiving a reflected EM signal from the further calibration waveguide, analysing the reflected EM signal to detect one or more further calibration peaks in the reflected EM signal and determining the dielectric constant of the liquid as a function of the frequency of the further calibration peaks and at least one dimension of the waveguide.

14. A method according to any of claims 11 to 13, further comprising transmitting an electromagnetic signal over a range of frequencies into a first end of a second waveguide (50) located within the cavity (28) the first end immersed in the liquid, the second waveguide (50) having a second end surrounded by the gas; receiving a reflected EM signal from the first waveguide (36); analysing the reflected EM signal to detect one or more peaks in the reflected EM signal; and determining the level of the liquid in the cavity as a function of the frequency of the peaks and the dielectric constants of the liquid and the gas.

## Patentansprüche

1. System zum Bestimmen des Flüssigkeitspegels in einem Stoßdämpfer, wobei das System aufweist:
einen teleskopischen Stoßdämpfer (20) mit:
einem Gehäuse (22);
einem Hohlraum (28), der in dem Gehäuse angeordnet ist und eine Flüssigkeit und ein Gas enthält;
einem Sensor zum Messen des Pegels der Flüssigkeit in dem Hohlraum, wobei der Sensor aufweist:
einen ersten Wellenleiter (36) mit einem ersten Ende und einem zweiten Ende, wobei der erste Wellenleiter (36) derart angeordnet ist, dass, wenn sich der Stoßdämpfer (20) im normalen Betrieb befindet, das erste Ende von dem Gas umgeben ist und das zweite Ende in die Flüssigkeit eingetaucht ist; und
ein Kommunikations-Interface (38), das zum Übertragen elektrischer Signale zwischen dem ersten Wellenleiter und dem außerhalb des Gehäuses gelegenen Bereich betreibbar ist; und
einen Transceiver (40), der ausgelegt ist zur Verbindung mit dem ersten Ende oder dem zweiten Ende des ersten Wellenleiters (36) und
der betreibbar ist zum Einkoppeln elektromagnetischer (EM) Wellen in den ersten Wellenleiter (36) und zum Empfangen reflektierter EM-Wellen aus dem ersten Wellenleiter (36), Senden eines elektromagnetischen Signals über einen Bereich von Frequenzen in ein erstes Ende oder ein zweites Ende des ersten Wellenleiters (36);
Empfangen eines reflektierten EM-Signals aus dem ersten Wellenleiter (36); und Analysieren des reflektierten EM-Signals zum Detektieren einer oder mehrerer Amplitudenspitzen in dem reflektierten EM-Signal;
**dadurch gekennzeichnet, dass** der Transceiver ausgelegt ist zum Bestimmen des Pegels der Flüssigkeit in dem Hohlraum (28) als Funktion der Frequenz der Amplitudenspitzen und der dielektrischen Konstanten der Flüssigkeit und des Gases.

2. System nach Anspruch 1, bei dem das erste Ende oder das zweite Ende des ersten Wellenleiters, das nicht mit dem Transceiver (40) verbunden ist, verkürzt ist.

3. System nach einem der Ansprüche 1 bis 2, ferner mit einem zweiten Wellenleiter (50), der in dem Hohlraum (28) angeordnet ist und ein erstes Ende und ein zweites Ende hat, wobei der zweite Wellenleiter (50) derart angeordnet ist, dass, wenn sich der Stoßdämpfer im normalen Betrieb befindet, das erste Ende des zweiten Wellenleiters (50) in die Flüssigkeit eingetaucht ist und das zweite Ende des zweiten Wellenleiters (50) von dem Gas umgeben ist; und wobei das Kommunikations-Interface (38) zum Übertragen elektrischer Signale zwischen dem zweiten Wellenleiter (50) und dem Äußeren des Gehäuses betreibbar ist.

4. System nach Anspruch 3, bei dem der Transceiver mit dem ersten Ende des ersten Wellenleiters (36) und dem ersten Ende des zweiten Wellenleiters (50) verbunden ist und/oder bei dem das zweite Ende des ersten Wellenleiters (36) und das zweite Ende des zweiten Wellenleiters (50) verkürzt sind.

5. System nach einem der vorhergehenden Ansprüche, ferner mit einem Kalibrierungs-Wellenleiter (48), der derart angeordnet ist, dass er vollständig in die Flüssigkeit eingetaucht ist, wenn sich der Stoßdämpfer (20) im normalen Betrieb befindet, wobei der Transceiver (40) mit einem Ende des ersten Kalibrierungs-Wellenleiters (48) verbunden ist.

6. System nach einem der vorhergehenden Ansprüche, bei dem der erste Wellenleiter (36) ein koaxialer Wellenleiter ist, der ein hohles Rohr aufweist, das koaxial um einen massiven Kern angeordnet ist.

7. System nach Anspruch 6, bei dem das hohle Rohr perforiert ist.

8. System nach einem der Ansprüche 1 bis 5, bei dem der erste Wellenleiter (36) ein Leiterplatten- (PCB-) basierter Wellenleiter ist.

9. System nach einem der vorhergehenden Ansprüche, bei dem das Kommunikations-Interface (38) einen Port (46) in einer Wand des Gehäuses und/oder eine induktive Schleife aufweist, die nahe einer Wand des Hohlraums angeordnet ist.

10. Abfragevorrichtung zur Verbindung mit dem Kommunikations-Interface (38) oder dem Transceiver eines teleskopischen Stoßdämpfers nach einem der vorhergehenden Ansprüche, wobei die Abfragevorrichtung zum Ausgeben von Daten betreibbar ist, die sich auf den Flüssigkeitspegel in dem Hohlraum (28) beziehen.

11. Verfahren zum Bestimmen des Flüssigkeitspegels in einem teleskopischen Stoßdämpfer (20), wobei der Stoßdämpfer ein Gehäuse (22) und einen Hohlraum (28) aufweist, der in dem Gehäuse angeordnet ist und eine Flüssigkeit und ein Gas enthält, wobei das Verfahren umfasst:
Senden eines elektromagnetischen Signals über einen Bereich von Frequenzen in ein erstes Ende oder ein zweites Ende eines ersten Wellenleiters (36), der in dem Hohlraum angeordnet ist, wobei das erste Ende von dem Gas umgeben ist und das zweite Ende in die Flüssigkeit eingetaucht ist; Empfangen eines reflektierten EM-Signals aus dem ersten Wellenleiter (36); und Analysieren des reflektierten EM-Signals zum Detektieren einer oder mehrerer Amplitudenspitzen in dem reflektierten EM-Signal; **dadurch gekennzeichnet, dass** das Verfahren ferner umfasst:
Bestimmen des Pegels der Flüssigkeit in dem Hohlraum (28) als Funktion der Frequenz der Amplitudenspitzen und der dielektrischen Konstanten der Flüssigkeit und des Gases.

12. Verfahren nach Anspruch 11, ferner umfassend: Senden eines elektromagnetischen Signals über einen Bereich von Frequenzen in einen Kalibrierungs-Wellenleiter (48), der in dem Hohlraum angeordnet und in die Flüssigkeit eingetaucht ist; Empfangen eines reflektierten EM-Signals aus dem Kalibrierungs-Wellenleiter; Analysieren des reflektierten EM-Signals zum Detektieren einer oder mehrerer Kalibrierungsspitzen in dem reflektierten EM-Signal; und Bestimmen der dielektrischen Konstanten der Flüssigkeit als Funktion der Frequenz der Kalibrierungsspitzen und mindestens einer Dimension des Kalibrierungs-Wellenleiters (48).

13. Verfahren nach Anspruch 12, ferner umfassend: Senden eines elektromagnetischen Signals über einen Bereich von Frequenzen in einen weiteren Kalibrierungs-Wellenleiter, der in dem Hohlraum angeordnet und von dem Gas umgeben ist; Empfangen eines reflektierten EM-Signals aus dem weiteren Kalibrierungs-Wellenleiter; Analysieren des reflektierten EM-Signals zum Detektieren einer oder mehrerer weiterer Kalibrierungsspitzen in dem reflektierten EM-Signal; und Bestimmen der dielektrischen Konstanten der Flüssigkeit als Funktion der Frequenz der weiteren Kalibrierungsspitzen und mindestens einer Dimension des Wellenleiters.

14. Verfahren nach einem der Ansprüche 11 bis 13, ferner umfassend:
Senden eines elektromagnetischen Signals über einen Bereich von Frequenzen in ein erstes Ende eines zweiten Wellenleiters (50), der in dem Hohlraum (28) angeordnet ist, wobei das erste Ende in die Flüssigkeit eingetaucht ist, wobei der zweite Wellenleiter (50) ein zweites Ende aufweist, das von dem Gas umgeben ist; Empfangen eines reflektierten EM-Signals aus dem ersten Wellenleiter (36); Analysieren des reflektierten EM-Signals zum Detektieren einer oder mehrerer Spitzen in dem reflektierten EM-Signal; und Bestimmen des Pegels der Flüssigkeit in dem Hohlraum als Funktion der Frequenz der Spitzen und der dielektrischen Konstanten der Flüssigkeit und des Gases.

## Revendications

1. Système pour déterminer le niveau de liquide dans un absorbeur de choc, le système comprenant :
un absorbeur de choc télescopique (20), comprenant :
un boîtier (22) ;
une cavité (28) située dans le boîtier et contenant un liquide et un gaz ;
un capteur pour mesurer le niveau du liquide dans la cavité, le capteur comprenant :
un premier guide d'ondes (36) ayant une première extrémité et une deuxième extrémité, dans lequel le premier guide d'ondes (36) est disposé de sorte que, lorsque l'absorbeur de choc (20) est en cours d'utilisation normale, la première extrémité soit entourée par le gaz et la deuxième extrémité soit immergée dans le liquide ; et
une interface de communication (38) pouvant être actionnée pour transférer des signaux électriques entre le premier guide d'ondes et l'extérieur du boîtier ; et
un émetteur-récepteur (40) disposé de façon à être connecté à la première extrémité ou à la deuxième extrémité du premier guide d'ondes (36) et pouvant être actionné pour coupler les ondes électromagnétiques (EM) dans le premier guide d'ondes (36) et recevoir des ondes EM réfléchies depuis le premier guide d'ondes (36),
la transmission d'un signal électromagnétique sur une gamme de fréquences dans une première extrémité ou une deuxième extrémité du premier guide d'ondes (36) ; recevoir un signal EM réfléchi du premier guide d'ondes (36) ; analyser le signal EM réfléchi pour détecter un ou plusieurs pics d'amplitude dans le signal EM réfléchi ; **caractérisé en ce que** l'émetteur-récepteur est disposé de façon à déterminer le niveau du liquide dans la cavité (28), en fonction de la fréquence des pics d'amplitude et des constantes diélectriques du liquide et du gaz.

2. Système selon la revendication 1, dans lequel la première extrémité ou la deuxième extrémité du premier guide d'ondes, qui n'est pas reliée à l'émetteur-récepteur (40), est en court-circuit.

3. Système selon l'une quelconque des revendications 1 à 2, comprenant en outre un deuxième guide d'ondes (50) disposé dans la cavité (28) et ayant une première extrémité et une deuxième extrémité, le deuxième guide d'ondes (50) étant disposé de sorte que, lorsque l'absorbeur de choc est en cours d'utilisation normale, la première extrémité du guide d'ondes (50) est immergée dans le liquide et la deuxième extrémité du deuxième guide d'ondes est immergée dans le gaz, et dans lequel l'interface de communications (38) peut être actionnée pour transférer des signaux électriques entre le deuxième guide d'ondes (50) et l'extérieur du boîtier.

4. Système selon la revendication 3, dans lequel l'émetteur-récepteur est raccordé à la première extrémité du premier guide d'ondes (36) et à la première extrémité du deuxième guide d'ondes (50) et/ou dans lequel la deuxième extrémité du premier guide d'ondes (36) et la deuxième extrémité du deuxième guide d'ondes (50) sont en court-circuit.

5. Système selon l'une quelconque des revendications précédentes, comprenant en outre un guide d'ondes d'étalonnage (48) disposé de façon à être totalement immergé dans le liquide, lorsque l'absorbeur de choc (20) est en cours d'utilisation normale, l'émetteur-récepteur (40) étant couplé à une extrémité du premier guide d'ondes d'étalonnage (48).

6. Système selon l'une quelconque des revendications précédentes, dans lequel le premier guide d'ondes (36) est un guide d'ondes coaxial comprenant un tube creux disposé de manière coaxiale autour d'un noyau solide.

7. Système selon la revendication 6, dans lequel le tube creux est perforé.

8. Système selon l'une quelconque des revendications 1 à 5, dans lequel le premier guide d'ondes (36) est un guide d'ondes basé sur une carte à circuits imprimés (PCB).

9. Système selon l'une quelconque des revendications précédentes, dans lequel l'interface de communications (38) comprend un orifice (46) dans une paroi du boîtier et/ou une boucle d'induction située à proximité d'une paroi de la cavité.

10. Dispositif d'interrogation à raccorder à l'interface de communications (38) ou à l'émetteur-récepteur d'un absorbeur de choc télescopique, selon l'une quelconque des revendications précédentes, le dispositif d'interrogation pouvant être actionné pour émettre des données relatives au niveau de liquide dans la cavité (28).

11. Méthode de détermination du niveau de liquide dans un absorbeur de choc télescopique (20), l'absorbeur de choc comprenant un boîtier (22) et une cavité (28) située dans le boîtier et contenant un liquide et un gaz, la méthode comprenant :
la transmission d'un signal électromagnétique sur une gamme de fréquences dans une première extrémité ou une deuxième extrémité d'un premier guide d'ondes (36) situé dans la cavité, la première extrémité étant entourée par le gaz, la seconde extrémité étant immergée dans le liquide ;
la réception d'un signal EM réfléchi du premier guide d'ondes (36) ; et
l'analyse du signal EM réfléchi pour déterminer un ou plusieurs pics d'amplitude dans le signal EM réfléchi ; **caractérisé en ce que** la méthode comprend en outre :
la détermination du niveau de liquide dans la cavité (28), en fonction de la fréquence des pics d'amplitude et des constantes diélectriques du liquide et du gaz.

12. Méthode selon la revendication 11, comprenant en outre la transmission d'un signal électromagnétique sur une gamme de fréquences dans un guide d'ondes d'étalonnage (48) situé dans la cavité et submergé dans le liquide ; la réception d'un signal EM réfléchi du guide d'ondes d'étalonnage ; l'analyse du signal EM réfléchi pour détecter un ou plusieurs pics d'étalonnage dans le signal EM réfléchi ; et la détermination de la constante diélectrique du liquide en fonction de la fréquence des pics d'étalonnage et d'au moins une dimension du guide d'ondes d'étalonnage (48).

13. Méthode selon la revendication 12, comprenant en outre la transmission d'un signal électromagnétique sur une gamme de fréquences, dans un guide d'ondes d'étalonnage ultérieur situé dans la cavité et entouré par le gaz, la réception d'un signal EM réfléchi du guide d'ondes d'étalonnage ultérieur ; l'analyse du signal EM réfléchi pour détecter un ou plusieurs pics d'étalonnage ultérieurs dans le signal EM réfléchi ; et la détermination de la constante diélectrique du liquide en fonction de la fréquence des pics d'étalonnage ultérieurs et d'au moins une dimension du guide d'ondes.

14. Méthode selon l'une quelconque des revendications 11 à 13, comprenant en outre la transmission d'un signal électromagnétique sur une gamme de fréquences, dans une première extrémité d'un deuxième guide d'ondes (50) situé dans la cavité (28), la première extrémité étant immergée dans le liquide, le deuxième guide d'ondes (50) ayant une deuxième extrémité entourée de gaz ; la réception d'un signal EM réfléchi du premier guide d'ondes (36) ; l'analyse du signal EM réfléchi pour détecter un ou plusieurs pics dans le signal EM réfléchi ; et la détermination du niveau de liquide dans la cavité, en fonction de la fréquence des pics et des constantes diélectriques du liquide et du gaz.
